# EUROPÄISCHE PATENTSCHRIFT

(11) **EP 1 001 565 B1**
(45) Veröffentlichungstag und Bekanntmachung des Hinweises auf die Patenterteilung: **04.05.2005**
(21) Anmeldenummer: 99122339.7
(22) Anmeldetag: 09.11.1999
(51) Int. Cl.: H04B 17/00, H04B 1/10

(54) **Verfahren zum Messen und Zuordnen von Störsignalen in zellularen Funknetzen**
Method for measuring and allocating interfering signals in cellular radio networks
Procédé pour mesurer et allouer des signaux d'interférence dans des réseaux mobiles cellulaires

(30) Priorität: 09.11.1998 DE 19851550
(43) Veröffentlichungstag der Anmeldung: 17.05.2000
(73) Patentinhaber: Rohde & Schwarz GmbH & Co. KG, 81671 München (DE)
(72) Erfinder: Wanierke, Otmar, 80469 München (DE); Spachtholz, Andreas, 84431 Weidenbach (DE)
(74) Vertreter: Graf, Walter, Dipl.-Ing.

(56) Entgegenhaltungen:
- DE-A- 4 430 348
- DE-A- 4 431 047

## Beschreibung

Die Erfindung betrifft und geht aus von einem Verfahren zum Messen von Störsignalen (Interference) laut Oberbegriff des Hauptanspruches.

Mit dem ständigen Ausbau der GSM-Mobilfunknetze entstehen immer mehr lokale Störgebiete, in denen sich Signalträger verschiedener Mobilfunkzellen störend überlagern. Dort sinkt die Übertragungskapazität und falls nicht auf einen anderen Kanal ausgewichen werden kann, kommt es im schlimmsten Fall zum Verbindungsabbruch. Solche Störungsgebiete werden von Spezialisten aufgedeckt, Störung und Störer identifiziert und die Ursache der Störung durch Antennenjustage, Leistungsanpassung oder geschicktes Aufteilen der Frequenzresourcen beseitigt. Dazu ist es jedoch erforderlich, die jeweiligen Störer zu messen und zu identifizieren.

Ein bekanntes Verfahren hierfür (Neues von Rohde & Schwarz, Heft 160, 1998, Seiten 24 und 25) besteht aus den folgenden drei Schritten:
1) Messung von Testsignalen
2) Suche von Mustersequenzen in Testsignalen
3) Zuordnung von Mustersequenzen zu deren aussendenden Sendestationen

Im Verfahrensschritt 1 werden Testsignale gemessen, in denen die Störsignale enthalten sein können. Ferner wird eine Systemuhr verwendet, mit der die Ankunftszeiten der Testsignale gemessen werden. Diese Ankunftszeiten werden den Testsignalen zugeordnet.

Im Verfahrensschritt 2 werden die Testsignale auf das Vorhandensein von Interfernzsignalen analysiert. Dazu wird durch Signalverarbeitung versucht, bekannte Mustersequenzen im Testsignal zu finden und deren Leistung zu bestimmen [2], [3]. Eine Vorfilterung periodisch wiederkehrender Mustersequenzen kann vorgenommen werden [5]. Als Ergebnis der Mustersequenzsuche erhält man für jede der gesuchten Mustersequenzen und für jede mögliche Startzeit der Mustersequenz innerhalb des Testsignals einen Musteridentifikator, der einen oder mehrere Meßwerte aufnehmen kann. Ein Musteridentifikator enthält zum Beispiel einen Meßwert der maximalen Leistung, die eine Mustersequenz an einer bestimmten Stelle im Testsignal annehmen könnte, falls sie dort vorhanden wäre. Oder ein Musteridentifikator enthält einen Meßwert zur Abschätzung der Wahrscheinlichkeit dafür, daß die gesuchte Mustersequenz sich an der Stelle im Testsignal befindet, an der die Mustersequenze gesucht wurde oder er enthält beide Meßwerte.

Da die Mustersequenzen der zu bestimmenden störenden Sendestationen im Testsignal i.a. mit anderen Signalen z.B. dem Nutzsignal vermischt sind, ist eine Bestimmung der Mustersequenz und deren Leistung nur mit einer bestimmten Wahrscheinlichkeit möglich. Ferner kann nicht vermieden werden, andere Signale mit Mustersequenzen zu verwechseln.

Im Verfahrensschritt (3) werden alle oder einige Mustersequenzen, die im Testsignal gefunden wurden, durch statistische Berechnungen den störenden Stationen zugeordnet, die diese Mustersequenzen ausgesendet haben könnten.

Dazu wird benutzt, daß sich die untersuchten Mustersequenzen der verschiedenen möglichen störenden Stationen in Länge, Codierung oder Modulation unterscheiden oder in unterschiedlichen Frequenz oder Zeitlagen empfangen werden. Die Charakteristischen Eigenschaften der Mustersequenzen und ihre absoluten Frequenzund Zeitlagen sind Erkennungsmerkmale, die zum Erkennen der aussendenden Station anhand des bewerteten Testsignals benutzt werden.

In Verfahrensschritt 3 sind einige oder alle Erkennungsmerkmale von einem Teil der störenden Stationen oder allen möglichen störenden Stationen bekannt. Insbesondere ist die zeitliche Lage der gesendeten Sequenzen bezüglich der Zeit der Systemuhr bekannt, die im Verfahrensschritt 1 verwendet wurde. Ein Verfahren für eine solche Zeitsynchronisation in Form einer Zeitversatzmessung ist in [1] beschrieben und wird bereits verwendet (Interferenzmeßsystem PCSD-K1 Option GSM Phase 2). Andere Merkmale, wie bestimmte Codierungen der benutzten Sequenzen oder verwendete Frequenzlagen sind aus Tabellen oder vorausgegangen Messungen bekannt.

Die bekannten Systeme haben den Nachteil auf die Ungenauigkeiten in der Mustersequenzerkennung ungünstig zu reagieren, so daß Verwechselungen und Fehlmessungen nicht auszuschließen sind und somit das Meßergebnis und das Zuordnungsergebnis nur mit einer begrenzten Sicherheit angegeben werden kann.

Noch gravierender wirken sich Abweichungen von den in Verfahrensschritt 3 benutzten Erkennungsmerkmalen zu den tatsächlichen Erkennungsmerkmalen aus. Diese entstehen z.B. durch Fehler in den tabellarischen Angaben aus denen Erkennungsmerkmale abgeleitet werden oder durch Neustarts von Sendestationen zwischen der Zeitversatzmessung [1] und der Aufzeichnung der Testsignale in Verfahrensschritt 1, wobei die Zeitinformation der neu gestarteten Station verloren geht . Ebenfalls wirkt sich eine Ungeauigkeit der Zeitinformation infolge von Schwankungen der Zeitnormale in den einzelnen Sendestationen ungünstig auf die statistischen Zuordnungsmethoden aus.

Ziel der Erfindung ist es, eine deutliche Verbesserung der bisher bestehenden Verfahren in Bezug auf die Erkennung der störenden Stationen und damit rückwirkend für die Messung der Störleistung zu erreichen.

Es ist Aufgabe der Erfindung, ein Verfahren aufzuzeigen, das diese Nachteile vermeidet und mit dem solche Störsignale sicher gemessen und deren Zuordnung zu den störenden Sendern einfach ermittelt und angezeigt werden kann.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Nach dem erfindungsgemäßen Verfahren werden die von den Mustersequenzanteilen abgeleiteten Musteridentifikatoren jeweils mit konstanten Zeitabständen graphisch oder numerisch aufsummiert und so zu Störungsidentifikatoren zusammengefaßt, die einen Benutzer sofort erkennen lassen, ob ein Störer vorhanden ist und wenn ja, welchem Sender das Störsignal zuzuordnen ist. Die Störungsidentifikatoren werden durch Zusammenfassen aller oder einiger Musteridentifikatoren erzeugt, die in einem Zeitraster liegen, welcher bezüglich der Zeitabstände dem Zeitraster entspricht, in welchem entsprechende Mustersequenzen für ein bestimmtes Störsignal liegen würden.

Eine Verbesserung bestehender Lösungen erfolgt erfindungsgemäß durch Bildung und graphische Darstellung neuer Störungsidentifikatoren. Diese werden erzeugt durch Zusammenfassen aller oder einiger Musteridentifikatoren, die in einem Zeitraster liegen, welches bezüglich der Zeitabstände dem Zeitraster entspricht, in welchem entsprechenden Mustersequenzen für ein bestimmtes Störsignal liegen würden.

Da vor der Bildung der Störungsidentifikatoren das Vorhandensein und die Leistung von Störungen der für die Störung infragekommenden Sendestationen nicht bekannt sind, werden Störungsidentifikatoren für alle möglichen oder eine Auswahl von Störsignalen gebildet und zwar für alle möglichen absoluten Zeitlagen der Mustersequenzen im Testsignal.

Dadurch enthält jeder Störungsidentifikator die Information über die absolute Zeitlage der zu ihm gehörenden Mustersequenzen im Testsignal. Weitehin enthält er Informationen darüber, ob in den Rastern mit der jeweils untersuchten absoluten Zeitlage überhaupt Mustersequenzen des untersuchten Störsignals gefunden wurden. In der Regel ist das nicht der Fall. Dann bezeichnet der Störungsidentifikator Störungsfreiheit bezüglich der untersuchten Störungsart. Weiterhin können bei vorhandenen Störungen Eigenschaften der Störung, die durch die Musteridentifikatoren charakterisiert werden, auch durch den Störungsidentifikator charakterisiert werden. Z.B. kann aus den zum Störungsidentifikator zusammengefaßten Musteridentifikatoren die gemessenen Leistung der zugehörigen Mustersequenzkorrelationen entnommen werden und daraus ein Mittelwert oder ein Maximalwert oder ein gewichteter Summenwert als Merkmal dem Störungsidentifikator zugeordnet werden.

In einem weiteren Schritt wird die Zuordnung zwischen Störungsidentifikatoren und störenden Stationen hergestellt. Diese Zuordnung kann für nur eine störende Station oder gleichzeitig für mehrere störenden Stationen ausgeführt werden. Die Zuordnung soll anhand einer Station beschrieben werden. Zuerst wird eine der möglichen störenden Stationen ausgewählt und aus deren zur Zeit der Zuordnung bekannten Erkennungsmerkmalen (Art der Mustersequenzen, gesendete Frequenz, mögliche absoluten zeitlichen Lage innerhalb der Testsignals) wird ein Vergleichsidentifikator gebildet, der in die grafische Darstellung eingetragen wird.
Dadurch wird eine Teilmenge aller dargestellten Störungsidentifikatoren markiert. Es kann nun überprüft werden, ob sich innerhalb der vom Vergleichsidentifikator markierten Teilmenge Störungsidentifikatoren befinden, die infolge einer tatsächlichen Störung gebildet wurden oder ob in der markierten Teilmenge nur Störungsidentifikatoren enthalten sind, die keine Störung, tolerierbar kleine Störungen oder Störungen anderer Art markieren. Im ersten Fall kann eine Störung durch die getestete Station mit hoher Wahrscheinlichkeit angenommen werden und in den anderen Fällen ist davon auszugehen, daß die gesuchte Station nicht stört oder die Erkennungsmerkmale der Station falsch waren, z.B. die Station zwischen der Zeitversatzmessung und der Interferenzmessung ausgeschaltet und neu gestartet wurde.

Die Erfindung soll anhand von Beispielen verdeutlicht werden. Auf entsprechende Zeichnungen wird verwiesen.

### Beispiel 1 GSM C0-Störungen:

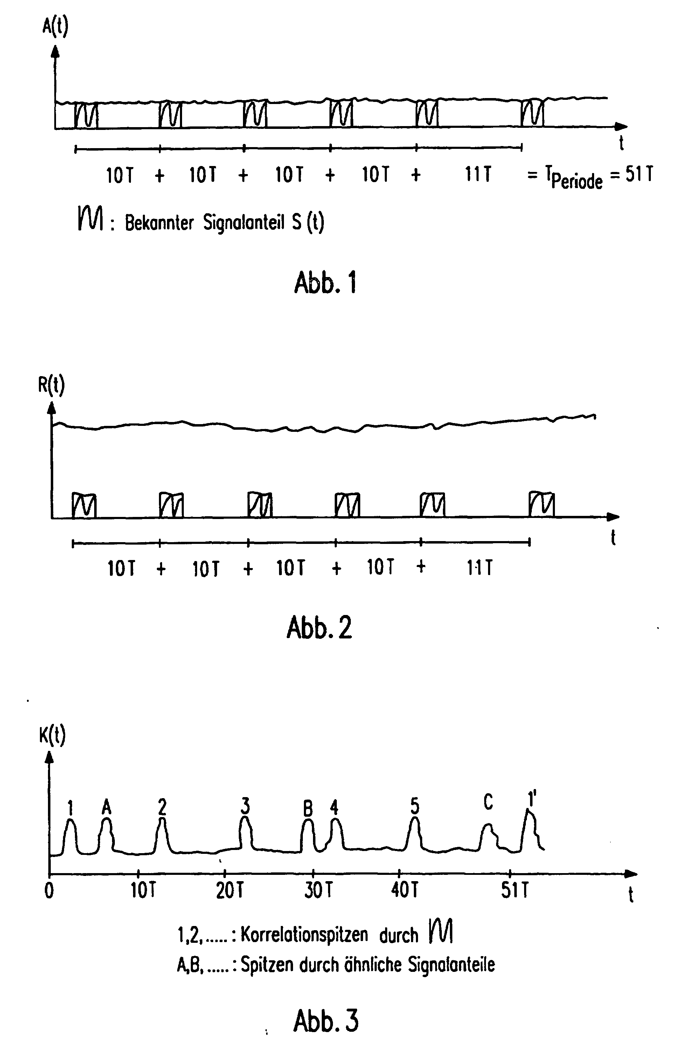

Das gesuchte Signal A(t) ist durch einen bekannten Signalteil S(t) charakterisiert. S(t) ist ein SCH-Signal oder ein FCCH-Signal eines GSM C0 Trägers ( Abb. 1 ). Diese Signalteile wiederholen sich im Signal A(t) an definierten Zeiten ( 10T, 20T, 30T, 40T, 51T, 61T, ... ). Daraus ergibt sich ein periodisches Zeitraster der Länge 51T, wobei sich fünf Mustersequenzen in einer Periode an bekannten Zeiten befinden. D.h. einer Periode von Mustersequenzen kann eine eindeutige Startzeit im Bereich von [0, 51T] zugewiesen werden.

Das empfangene Signal R(t) ist eine Überlagerung von A(t) mit anderen unbekannten Signalen (Abb. 2).

Mit einer geeigneten Korrelation [4] oder anderen linearen Abbildungen werden die bekannten Signalanteile von A(t) im Empfangssignal R(t) gesucht. Das Korrelationsergebnis K(t) ( Abb.3 ) ist der Musteridentifikator für die absolute Zeit t der Mustersequenz für die der Korrelator maximale Korrelationsergebnisse liefert. Zeigt es an den Anfangszeiten von S(t) jeweils lokale Maxima (1, 2, 3, 4,..), deuten die Musteridentifikatoren das Vorhandensein von Mustersequenzen an. Einige lokale Maxima ( A, B,C, ...) werden durch Signalteile in R(t) erzeugt, die dem Signal S(t) ähnlich sind. Diese zusätzlich entstehenden Maxima erschweren die Störeridentifikation erheblich.

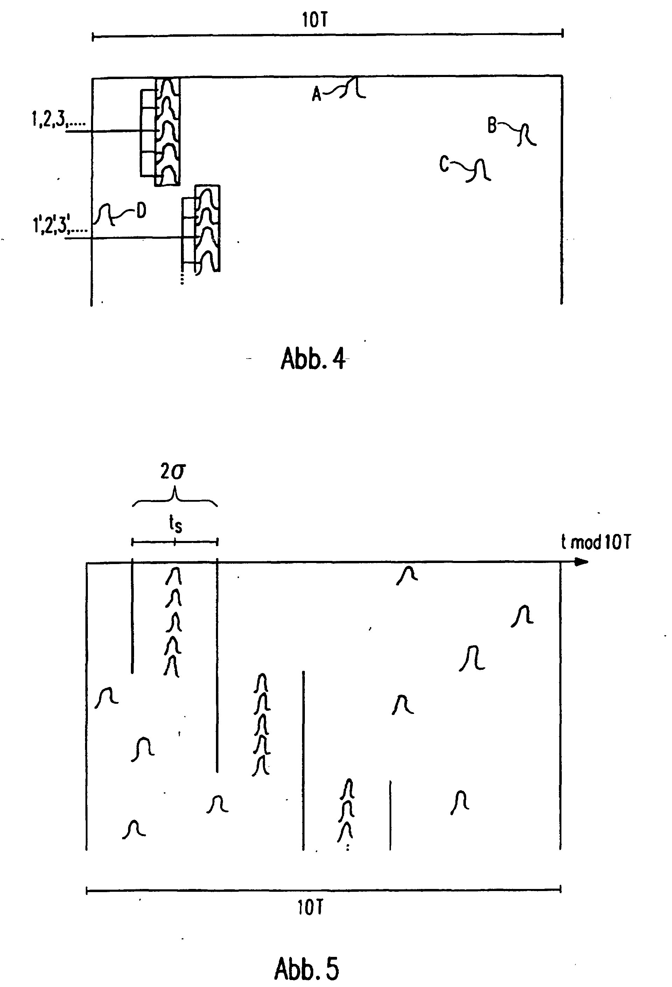

Um diesen Effekt zu umgehen wird das Korrelationsergebnis in Abb. 4 so dargestellt, daß sich Gruppen von Musteridentifikatoren ergeben, die nun wesentlich leichter zu erkennen sind. Um dies zu erreichen, wird das Korrelationsergebnis K(t) zeilenweise untereinandergeschrieben. Die Länge einer Zeile entspricht dabei einer konstanten Zeit T_{Z}, die für das jeweilige Zeitraster geeignet gewählt wird. In Abb. 4 wurde T_{Z} = 10T gewählt. Bei dieser Wahl von T_{Z} bilden die Maxima einer Periode jeweils eine senkrechte Gruppe. Die zusätzlich entstandenen Maxima verteilen sich auf die übrige Fläche. Eine treppenförmige Darstellung mit Gruppen von je fünf Musteridentifikatoren mit dem Abstand von T ergeben den Störungsidentifikator

Kennt man die erwartete Startzeit tₛ mit seiner Standardabweichung σₛ eines Signals A(t), so kann man die gewonnene Darstellung mit einem Vergleichsidentifikator in Form einer Schablone überlagern (Abb. 5 ). Ist die Schablone mit einem störungsanzeigenden Störungsidentifikator gefüllt, so resultieren die Maxima von K(t) mit sehr hoher Wahrscheinlichkeit aus dem Signal A(t). Das Signal A(t) war somit im Empfangssignal R(t) enthalten, und ist als Störsignal des Empfangssignal R(t) identifiziert.

### Beispiel 2 GSM Cx-Störungen

Bei einem GSM-Cx Träger als Störsignal, werden innerhalb von jedem gesendeten Burst eine von 8 möglichen Trainingssequenzen T1 bis T8 gesendet. In diesem Beispiel wird davon ausgegangen, daß die Sendestationen so konfiguriert sind, daß von einer Station nur eine der 8 möglichen Trainingssequenzen verwendet wird und die verwendete Trainingssequenz, jeder möglicherweise störenden Station im Meßsystem zur Zeit der Zuordnung von Störungsidentifikatoren bekannt ist. Ferner gibt es im Meßsystem 8 Korrelationsfilter K1 .. K8, die das Signal der entsprechenden Trainingssequenz filtern.

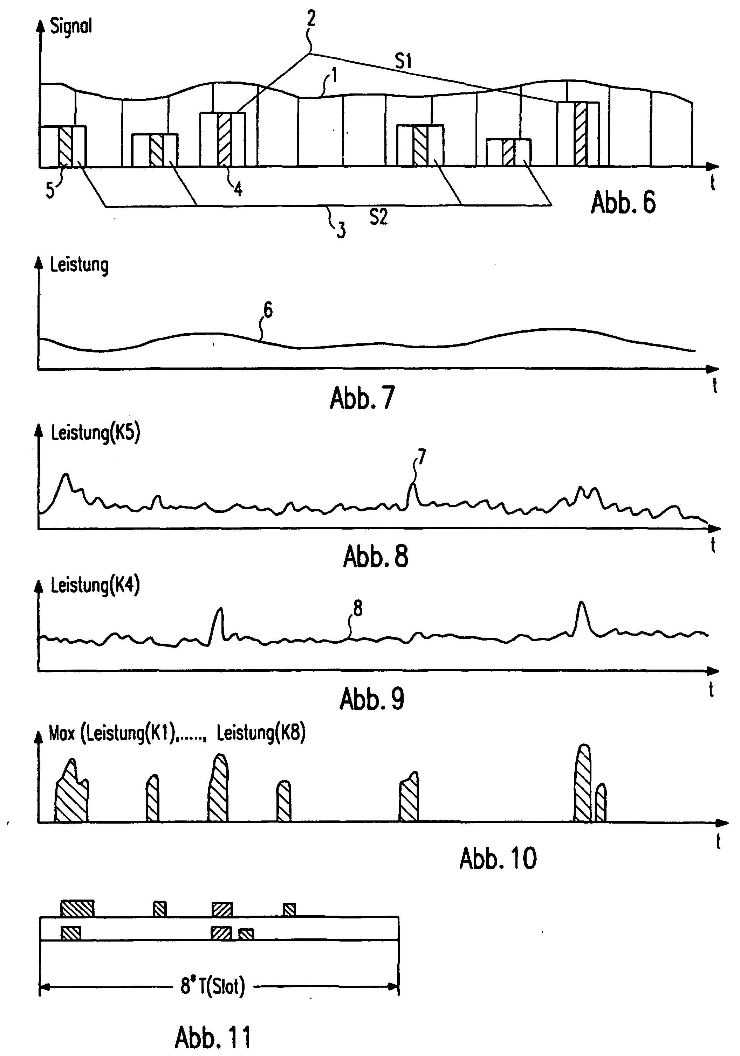

Die Bursts werden innerhalb vorgegebener Zeitschlitze gesendet. Die Zeitschlitze liegen für jeden Sender nebeneinander und haben eine feste Länge von 576.92 Mikrosekunden. Dadurch ist ein periodisches Zeitraster für die in der Mitte der Bursts liegenden Trainingssequenzen vorgegeben. In Abb. 6 ist ein Testsignal dargestellt, daß aus einem C0-Nutzsignal (1), einem Cx-Störsignal S1 (2) und einem anderen Cx-Störsignal S2 (3) besteht. Für dieses Beispiel sei die Trainingssequenz für S1 T5 (5) und für S2 T4 (4).

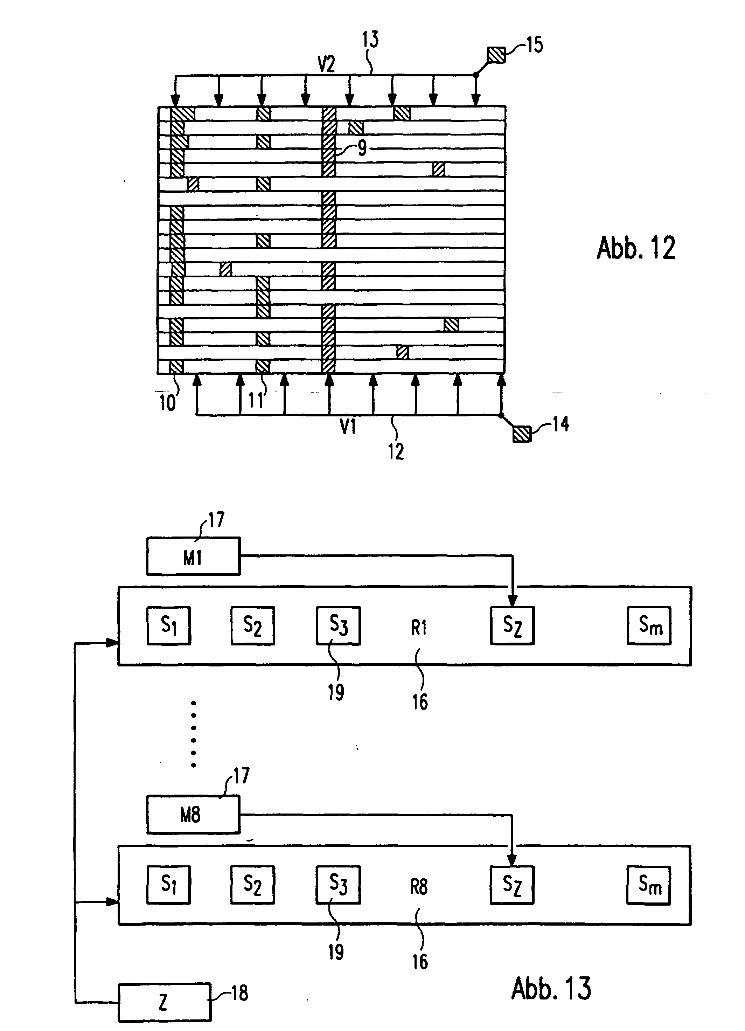

In Abb. 7 ist die über die Länge eines Bursts geeignet gewichteter Leistung des Summensignals (6) aufgetragen. Weiterhin wurden die Leistungen des mit den Korrelationsfilten K1..K8 gefilterten Testsignals gemessen. In Abb. 9 wurde die Leistung des mit einem Korrelationsfilter K5 gefilterten Testsignals (7) und in Abb. 10 die Leistung des mit einem Korrelationsfilter K4 gefilterten Testsignals (8) aufgetragen. Es werden nun 8 binäre Musteridentifikatoren M1..M8 für jeden Zeitwert verwendet. Der Musteridentifikator M1 wird auf den Wert 1 gesetzt, wenn das Korrelationsleistungssignal des Filterausganges von K1 größer ist, als das gewichtete Leistungssignal (6) und größer ist als alle anderen Filterausgänge K2 bis K8 und sonst wird er auf den Wert 0 gesetzt. In gleicher Weise werden die Musteridentifikatoren M2 bis M8 belegt Nun werden die Musteridentifikatoren zeilenweise grafisch dargestellt. Falls ein Musteridentifikator M1 bis M8 den Wert 1 hat, wird ein dem Musteridentifikatorgrafische zugeordnetes grafisches Merkmale z.B. eine Farben oder wie in Abb. 11 eine Schraffur an die der Zeit entsprechenden Spaltenposition eingetragen.
Die Zeilenlänge beträgt ein Vielfaches einer Zeitschlitzlänge T(Slot), vorzugsweise 1*T(Slot) oder 8*T(Slot). In Abb. 11 wurde eine Zeilenlänge von 8*T(Slot) verwendet. Dort stehen Musteridentifikatoren jedes achten Zeitschlitzes, der für einen logischen GSM-Kanal verwendet wird, untereinander und bildet einen Störungsidentifikator in Form von einer bis acht senkrechten ggf. unterbrochenen Linien eines grafischen Merkmales (Abb. 12). Die Linie (9) ist ein Störungsidentifikator für die Störung von Signal (2), die Linien (10) und (11) sind der Störungsidentifikator für die Störung von Signal (3).

Zur Zuordnung der Merkmale werden Vergleichsidentifikatoren V1 (12) und V2 (13) für die Sendestationen möglicher Störsignalen, in diesem Fall der Störsignale S1 und S2 eingetragen. Die Vergleichsidentifikatoren markieren 8 Spalten und das grafische Merkmal, hier die Schraffur (14), (15), für die gesendete Trainingssequenz.

Es kann nun mit hoher Sicherheit festgestellt werden, daß Linie (9) wegen der übereinstimmenden Meßzeit und Trainingssequenzmarkierung (14) zur Störstation des Vergleichsindikators V1 gehört, und ebenso Linien (10) und (11) zur Störstation des Vergleichsindikators V2 gehören.

### Beispiel 3: Aufsummiern von Werten des Musteridentifikators bei GSM Cx-Störungen:

Die 8 Musteridentifikatoren (17) M1 bis M8 sollen wie bei Beispiel 2 in diskreten Zeitabständen dT erzeugt werden. Die Größenordnung von dT entspricht dem Reziprokwert der Bandbreite des untersuchten Signals z.B 1/200 kHz = 5 Mikrosekungen für ein GSM Signal. Ferner ist dT ein Bruchteil der in Beispiel 2 verwendeten Zeilenlänge von 8*T(Slot): dT = 8*T(Slot)/m . Für m=1000 ergibt sich dT = 4,6153846 Mikrosekunden. Weiterhin wird für jede der 8 Mustersequenz T1..T8 bzw. Musteridentifikatoren M1..M8 ein Register (16) R1..R8 aus m Speicherzellen (19) benutzt, welche vor der Messung mit dem Wert Null belegt werden. Ferner existiert ein Zähler (18) in dessen Zählerstand Z bei jeder Bildung der Musteridentifikatoren M1 bis M8 um Eins erhöht wird aber bei Erreichen des Wertes m+1 sofort auf der Wert 1 zurückgesetzt wird. In den Registern R1..R8 Register wird zum Inhalt der Speicherzelle Z der Wert des entsprechenden Musteridentifikators M1..M8 addiert. Natürlich können mit diesem Verfahren nicht nur binäre Werte von Musteridentifikatoren aufsummiert werden, ebenfalls ist es möglich Musteridentifikatoren mit mehreren Werte zu benutzen, wobei dann entsprechend mehrere Speicherzellen erforderlich werden. Nach eine längeren Akkumulationszeit könnten die Werte jedes Registers grafisch, hier z.B. mit Hilfe von 8 Kurven, dargestellt werden.

### Literratur

[1] Neues von Rohde & Schwarz, Heft 160, 1998, Seiten 24 und 25
[2] Patentschrift DE 44 30 348 C 2
[3] Patentschrift DE 44 30 349 C 2
[4] E.Schrüfer; Signalverarbeitung; Carl Hanser Verlag München Wien
[5] Patentschrift DE 44 31 047 C 2

## Patentansprüche

1. Verfahren zum Messen von Störsignalen, die an einem Meßort innerhalb eines zellularen Funknetzes von mindestens einer Basisstation empfangen werden, wobei die Basisstationen Signale aussenden, die in einem bekannten Zeitraster bekannte Mustersequenzen enthalten,
**dadurch gekennzeichnet,**
**daß** am Meßort aus den empfangenen Signalen in an sich bekannter Weise die Mustersequenzanteile herausgefiltert und daraus Musteridentifikatoren gebildet werden und mindestens ein Teil dieser Musteridentifikatoren, die in dem Zeitraster der Mustersequenzen der gleichen Basisstation liegen, zu Störungsidentifikatoren zusammengefaßt werden.

2. Verfahren nach Anspruch 1,
**dadurch gekennzeichnet,**
**daß** die Musteridentifikatoren in Zeilen von konstanter Länge übereinander auf einer Aufzeichnungseinrichtung graphisch dargestellt werden.

3. Verfahren nach Anspruch 1,
**dadurch gekennzeichnet,**
**daß** die Musteridentifikatoren in ein Register mit konstanter Anzahl von Speicherzellen eingelesen werden und die so durch numerisches Aufsummieren gebildeten Störungsidentifikatoren auf einer Anzeigeeinrichtung graphisch dargestellt werden.

4. Verfahren nach einem der vorhergehenden Ansprüche,
**dadurch gekennzeichnet,**
**daß** das Herausfiltern der Mustersequenzanteile durch Korrelation erfolgt.

5. Verfahren nach einem der vorhergehenden Ansprüche,
**dadurch gekennzeichnet,**
**daß** aus den bekannten Erkennungsmerkmalen der Basisstationen Vergleichsidentifikatoren gebildet werden, die in Zuordnung zu den ermittelten Störungsidentifikatoren auf der Anzeigeeinrichtung angezeigt werden.

6. Verfahren nach Anspruch 5,
**dadurch gekennzeichnet,**
**daß** die Vergleichsidentifikatoren in Form von Schablonen angezeigt werden, die aus dem Zeitraster der Mustersequenzen der Basisstationen ermittelt werden.

## Claims

1. Method for measuring interference signals, which are received at a measuring position within a cellular telephone network by at least one base station, wherein the base stations transmit signals, which contain pattern sequences known within a known time grid,
**characterised in that,**
at the measuring position, the pattern-sequence components are filtered out in a per se known manner from the signals received; that pattern identifiers are formed from these; and that at least some of these pattern identifiers, which are disposed in the time grid of the pattern sequences of the same base station, are combined to form interference identifiers.

2. Method according to claim 1,
**characterised in that**
the pattern identifiers are presented graphically in a recording device one above the other in lines of constant length.

3. Method according to claim 1,
**characterised in that**
the pattern identifiers are read into a register with a constant number of memory cells, and that the interference identifiers formed in this manner by numerical summation are presented graphically in a display device.

4. Method according to any one of the preceding claims,
**characterised in that**
the pattern-sequence components are filtered out by correlation.

5. Method according to any one of the preceding claims,
**characterised in that**,
from the known identification features of the base stations, comparison identifiers are formed, which are displayed in the display device in allocation to the determined interference identifiers.

6. Method according to claim 5,
**characterised in that**
the comparison identifiers are displayed in the form of templates, which are determined from the time grid of the pattern sequences of the base stations.

## Revendications

1. Procédé pour mesurer des signaux d'interférence qui sont reçus par au moins une station de base à un point de mesure à l'intérieur d'un réseau radio cellulaire, les stations de base envoyant des signaux qui comprennent des séquences types,
**caractérisé en ce que**
au point de mesure, les séquences types sont filtrées de manière connue en soi à partir des signaux reçus et des identificateurs types sont formés à partir de là et au moins une partie de ces identificateurs types, qui se trouvent dans la grille de temps des séquences types de la même station de base, sont rassemblés pour former des identificateurs d'interférence.

2. Procédé selon la revendication 1,
**caractérisé en ce que**
les identificateurs types sont représentés graphiquement en lignes de longueur constante les uns sur les autres sur une installation d'enregistrement.

3. Procédé selon la revendication 1,
**caractérisé en ce que**
les identificateurs types sont mémorisés dans un registre avec un nombre constant de cellules de mémoire et les identificateurs d'interférence ainsi formés par totalisation numérique sont représentés graphiquement sur une installation d'affichage.

4. Procédé selon l'une quelconque des revendications précédentes,
**caractérisé en ce que**
le filtrage des portions de séquences types se fait par corrélation.

5. Procédé selon l'une quelconque des revendications précédentes,
**caractérisé en ce que**
des identificateurs de comparaison, qui sont affichés sur l'installation d'affichage en étant alloués aux identificateurs d'interférence déterminés, sont formés à partir des caractéristiques d'identification connues des stations de base.

6. Procédé selon la revendication 5,
**caractérisé en ce que**
les identificateurs de comparaison sont affichés sous forme de gabarits qui sont déterminés à partir de la grille de temps des séquences types des stations de base.
